# EUROPEAN PATENT SPECIFICATION

(11) **EP 2 826 543 B1**
(45) Date of publication and mention of the grant of the patent: **18.12.2019**
(21) Application number: 14168060.3
(22) Date of filing: 13.05.2014
(51) Int. Cl.: B01D 53/44, B01D 53/84, B01D 53/85

(54) **A BIOFILTER-ADSORBER**
BIOFILTERADSORBER
BIOFILTRE-ABSORBANT

(30) Priority: 16.07.2013 LT 2013075
(43) Date of publication of application: 21.01.2015
(73) Proprietor: Vilniaus Gedimino technikos universitetas, 10223 Vilnius (LT)
(72) Inventor: Baltrenas, Pranas, 07143 Vilnius (LT); Baltrenaite, Edita, 07143 Vilnius (LT)
(74) Representative: Pranevicius, Gediminas

(56) References cited:
- EP-A1- 2 441 509
- EP-A2- 0 249 861
- US-A1- 2005 250 201
- US-A1- 2013 137 170

## Description

### TECHNICAL FIELD

The present invention relates to biofilters with biologically activated material, specifically - for biofilters for removing volatile organic compounds, for example, acetone, butanol, toluene, xylene, styrene, butyl acetate, phenol, formaldehyde, etc. from air or gas.

### BACKGROUND ART

Biofilters can be used in chemistry, food industry, for furniture production, wastewater treatment, waste management, wood processing and oil refinery, in machinery production and repair companies and other industries, where various organic pollutants are emitted. Biofilters can be installed practically in all industrial enterprises where there are painting processes and where various thinners and solvents are used for cleaning parts or equipment. Biofilters are able not only of removing volatile organic compounds from air or gas, they also neutralise unpleasant odours, i.e. purify air or gas by eliminating even very small concentrations of these compounds. Therefore, biofilters can be widely used in agriculture, dump sites, wastewater treatment facilities, slaughterhouses, cattle-sheds, etc., where ammonia and hydrogen sulphide are emitted.

A biofilter is a cost-efficient and environmentally friendly device for reducing emission of gaseous pollutants into the air.

The shortcomings of currently used biofilters are high aerodynamic resistance of the charge, complicated maintenance of humidity and operating temperature in the charge, a lot of power is necessary for humidifying the charge. When operating plate-type biofilters with a capillary charge wetting system, air treatment efficiency is rather low because some pollutants get through the gaps between plates, especially in case of an increased flow rate of polluted air, e.g. over 0.1 m/s.

An analogue of the presented invention is a biofilter-adsorber for removing gaseous pollutants from air (Lithuanian patent No. LT5528B, which corresponds to its European Patent Family member EP2441509), which is intended for eliminating volatile organic compounds, ammonia and hydrogen sulphide from air. The air treatment device consists of a metal body, water tank, excess water removal unit, heating elements used for heating air in the device, filtering charge, percolators, pipe for water supply to the tank, branches for sampling air, ventilator blowing polluted air into the device, air ducts for supplying polluted air to the device and for removing it. Shortcomings of this device: the device does not have an air heating system, which would facilitate growth of microorganisms, a lot of power is necessary for humidifying the charge, charge of natural origin is not sustainable, whereas artificial charge needs to be regularly activated with microorganisms.

A prototype for the present invention is a plate-type biofilter with a capillary system for charge humidification (Lithuanian patent No. LT5862B), which is intended for removal of volatile organic pollutants from air. In this plate-type biofilter with a capillary system for charge humidification, which has a polluted air supply duct, a filtering charge, a humidification system, a ventilator which blows polluted air to the filter, and systems for temperature maintenance in the biofilter, the device's filtering section consists of many vertical polymer plates covered from both sides with porous lightly pressed boards of thermally modified wood fibre and arranged with milligaps (0.5 - 1.0 mm) among them in parallel to polluted air movement direction and partially, optimally 1/3, submersed in activated liquid, thus causing capillary humidification of the filtering section. The shortcoming of this device: though the distance between plates is very small, i.e. between 1.0 - 2.0 mm, but pollutants are able to skip between the plates, therefore, treatment efficiency is not high.

### SUMMARY OF THE INVENTION

The aim of the present invention is to improve the structure of the treatment device, biocharge with adsorption properties, to increase air treatment efficiency and sustainability.

The biofilter operation principle is based on the decomposition of gaseous pollutants by using certain cultures of microorganisms. The method of biological treatment of air polluted with organic pollutants employs less expensive, more effective, waste-free and environmentally friendly biotechnologies which allow more effective cleaning of the air from volatile organic compounds and neutralisation of unpleasant odours.

The main element of the biofilter-adsorber is a charge. The charge consists of wood or coal granules mixed with thermally modified wood fibre and it is placed in 20 - 30 mm diameter tubes with porous or perforated walls. Perforation of tube walls: diameter of 1.0 - 2.0 mm and remove of 0.5 - 1.0 mm. In order that the charge would not crumble out of the tubes, their ends are covered with lattice with 0.5 - 1.0 mm diameter holes.

Tubes are placed in lines, the distance between them in a line is 1.0 - 2.0 mm, and lines are placed at the angle of 30 - 45° with regard to the polluted air flow movement direction.

The ends of the tubes are hermetically fixed in the holes of horizontal perforated sheets, in the lower sheet - at 1/3 of the tube height from the bottom, in this way vertical tubes and horizontal sheets make a comb. This comb is hermetically fixed in the body, submersing 1/3 of the lower part of the tubes in the activated liquid. The larger the number of tubes in the comb, the smaller the resistance of polluted air, the flow rate of polluted air in the biofilter must be no more than 0.05 - 0.1 m/s. After polluted air is supplied to the biofilter-adsorber, it passes through the comb of tubes and, after reaching the final wall of the filter, recoils and is forced to further make a 90° turn and move upwards, thus reducing the flow rate to that close to zero. Then the polluted air flow is forced to move through porous or perforated walls of the tubes inside the tubes and pass through the charge, where adsorption and biological processes occur. A part of air pollutants passing through the charge are consumed by microorganisms, the other part is adsorbed in pores of adsorbents and capillaries. These pollutants are consumed by microorganisms when supplied volumes of pollutants decrease or when there is no supply at all.

As known from the laws of physics, when a liquid interacts with the walls of a solid body, the forces of surface stress try to raise the level of the liquid. The column pressure of the liquid which ascends by the walls of a solid body is set off by the pressure directed upwards which is created by curved surface stress. Thus, under the impact of the forces of surface stress, liquid is flowing within capillaries. Such a phenomenon is known as capillarity and can be applied in an air treatment biofilter for the humidification of a charge.

In order to achieve the capillary effect of humidification, the bottom (1/3) part of vertical tubes filled with adsorbent charge with porous or perforated walls is submersed in activated solution. It has been determined experimentally that upon submersing such a part in salts solution, the liquid in the tubes rises up to the top of the tubes, thus humidifying tubes in their entirety and, at the same time, the charge inside the tubes. This system of self-humidification does not consume additional energy. The charge is humidified well even when a technological process is interrupted, during repair works or when power supply is discontinued. The excess humidity causes the optimal humidification of the biocharge, which increases the aerodynamic resistance of the charge, reduces the time of pollutants' interaction with microorganisms, and at the same time the treatment efficiency of the device. Compared to a plate-type biofilter system, the capillary effect in tubes manifests itself much better.

Use of the capillary charge humidification system enables to avoid possible washing out of biomass from the charge.

In case of using the capillary charge humidification system, the device operation costs decrease as it is not necessary to wet the charge by spraying biogenic solutions over it.

### BRIEF DESCRIPTON OF DRAWINGS

The drawings give images of a biofilter-adsorber, where:

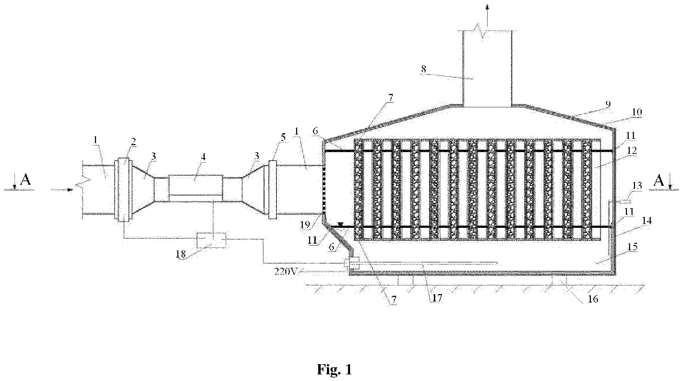

Fig. 1 is a diagrammatic view of a biofilter-adsorber of the present invention in a longitudinal section;

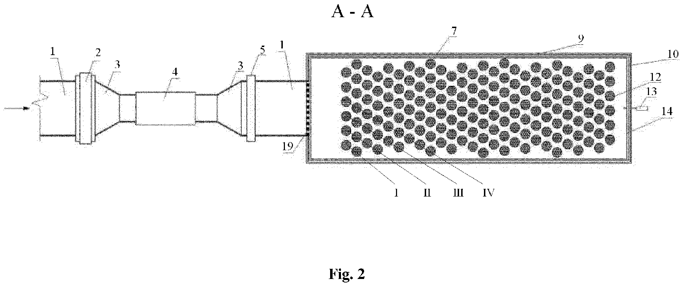

Fig. 2 is a view of the section of a biofilter-adsorber of the present invention via line A-A of Fig. 1;

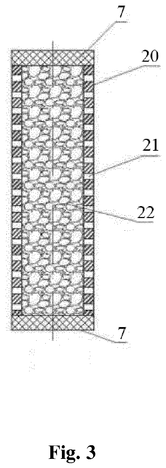

Fig. 3 is a cross-sectional view of one of plurality of vertical tubes with porous or perforated walls forming the charge of the biofilter-adsorber.

### DESCRIPTION OF THE PREFERRED EMBODIMENT

The biofilter-adsorber comprises a polluted air duct 1, ventilator 2, air duct connector of different diameters 3, heating elements for air heating 4, valve 5, upper and lower sealing sheets 6, air flow distribution lattice 7, cleaned air discharge pipe 8, body of the biofilter-adsorber 9, thermal insulation of the body 10, fastenings for the upper and lower sealing sheets 11, biofilter tube with the charge 12, temperature sensor 13, water tank 14, water 15, biofilter-adsorber bearing structure 16, electric heating elements with a thermostat 17, control panel 18, perforated sheet 19, porous or perforated body of a tube 20, tube hole 21, charge 22 (wood or coal granules mixed with thermally modified wood fibre).

### Device operation principle

The ventilator 2 takes polluted airflow through the air duct 1 to the biofilter-adsorber. In order to avoid large differences in temperature (a temperature shock) polluted air accessing the device is heated from 4 to 30°C. The heating system is connected with the ventilator by the air duct connector 3 of different diameter. Airflow supplied to the biofilter is regulated with the valve 5 fitted in the air duct 1. There is a structure fitted inside the device - a comb consisting of the upper and lower horizontal sheets 6 with holes for hermetic installation of vertical tubes 20. The comb with horizontal sheets 6 is installed inside the device 9 with sealing fastenings 11. To achieve a uniform airflow distribution inside the comb, perforated sheet 19 is fitted in the air duct 1 at the entrance to the comb. The device body 9 is covered with a thermal insulation layer 10 from inside, which retains heat in the device 9. The water tank 14 is placed between the lower horizontal sheet 6 and the bottom of the device 9 for humidifying the charge in the tubes 20 by use of the capillary effect. In order to heat water in it, there is an electric heating element with the thermostat 17 and water temperature sensor 13. In order that charge 22 (wood or coal granules mixed with thermally modified wood fibre) would not crumble out of the tubes 20, the tube ends are covered with lattice 7, the wholes of which are 0.5 - 1.0 mm in diameter. The device contains porous or perforated tubes 20 with holes of 1.0 - 2.0 mm in diameter and a remove 21 of 0.5 -1.0 mm.

The main pollutant treatment element in the biofilter-adsorber is a comb, where between horizontal hermetic sheets a lot vertical tubes 20 are hermetically fitted, which are placed in lines I, II, III, IV, etc., distances between the tubes are 1.0 - 2.0 mm, the lines I, II, III, IV, etc. are installed at the angle of 30 - 45° with regard to the polluted air movement direction, and the distance between lines I, II, III, IV, etc. does not exceed the radius of a tube 20. Such placement of tubes 20 creates optimal possibilities for good contact of polluted air with surfaces of the tubes 20. Besides, after polluted air passes along all the tubes 20, it hits the final wall of the device, makes a 90° turn and gets inside the tubes 20, passes through the entire charge 22, which removes pollutants, gets into the upper part of the device and is discharged through the cleaned air discharge pipe 8.

The volume of the biofilter-adsorber 9 must be such that the flow rate of polluted air in it would not exceed 0.01 - 0.1 m/s, and changing the flow direction at the 90° angle permits reducing the air flow rate to almost zero for a short time. This creates favourable conditions giving microorganisms enough time to consume the pollutants. If the concentration of pollutants is big enough, pollutants are adsorbed in inner and external capillaries of coal granules. Such a double pollutant collection mechanism (the impact of microorganisms and adsorption effect) enables a significant increase of air treatment efficiency. In case of reduced concentration of air pollutants, microorganisms have a possibility to use the accumulated (adsorbed) pollutants, in this way avoiding regeneration of the biofilter-adsorber.

The charge placed in the tubes of the biofilter-adsorber consists of an inorganic medium, i.e. of wood or coal granules of 2.0 - 6.0 mm in diameter, and an organic medium, i.e. thermally modified wood fibre, at the ratio of 10:1. The wood fibre accounts only for one tenth of the charge, but that is enough for natural formation of microorganisms in it, their subsequent growth and filling the inorganic medium of the charge on the surface and in inner capillaries of wood or coal granules. Microorganisms appear and propagate successfully at the temperature of 25 - 30°C and at the relative humidity of about 80%.

## Claims

1. A biofilter-adsorber comprising a polluted air supply duct, a body, a polluted air filtering section consisting of plurality of filtering tubes arranged in the body, a humidification system arranged below the filtering section, systems for maintaining the temperature in the filter, and a purified air outlet, **characterised in that** the filtering section consists of a structural comb consisting of of plurality of tubes (20) of porous or perforated walls filled with filtering charge consisting of activated granules of wood or coal mixed with thermally modified wood fibre, the filtering tubes (20) being arranged vertically in the biofilter's body (9) and perpendicularly to the direction of a polluted air flow entering the filter between the upper and the lower hermetic horizontal sheets (6) with ends of the tubes (20) below the lower horizontal sheet (6) submersed in an activated liquid, thus forcing the entire polluted air flow entering the filtering section to move through the walls of the tubes (20) and further through the filtering charge inside the tubes (20) to the discharge duct (8).

2. The biofilter-adsorber according to claim 1, **characterised in that** the tubes (20) are filled with granules of wood or coal of 2.0 - 6.0 mm in diameter mixed with thermally modified wood fibre at the ratio of 10:1.

3. The biofilter-adsorber according to claim 1, **characterised in that** the perforations in the walls of the tubes (20) are of 1.0 to 2.0 mm in diameter and the distance between adjacent perforations is of 0.5 to 1.0 mm.

4. The biofilter-adsorber according to claim 1, **characterised in that** the tubes (20) are placed in lines (I, II, III, IV, etc.) at the angle of 30 - 45° with respect to the direction of the polluted air entering the filter at the distance of 1.0 - 2.0 mm in a line and the distance between the lines (I, II, III, IV, etc.) not exceeding the radius of the tube (20).

5. The biofilter-adsorber according to claim 1, **characterised in that** the ends of the tubes (20) are covered with mesh (7) having holes of 0.5 to 1.0 mm in diameter.

6. The biofilter-adsorber according to claim 1, **characterised in that** the lower ends of tubes (20) are fixed in the lower horizontal sheet (6) at 1/3 of the tubes (20) height from the bottom and being submersed in the activated liquid to cause capillary humidification of the filtering charge inside the tubes (20).

7. The biofilter-adsorber according to claim 6, **characterised in that** the lower horizontal sheet (6) being a partition separating the polluted air movement space from the water tank (14) with activated liquid.

## Patentansprüche

1. Biofilteradsorber, umfassend eine Zufuhrleitung von verunreinigter Luft, einen Körper, einen aus einer Mehrzahl von in dem Körper angeordneten Filtrierröhren bestehenden Filtrierungsabschnitt für die verunreinigte Luft, ein unterhalb des Filtrierungsabschnitts angeordnetes Befeuchtungssystem, Systeme zum Beibehalten der Temperatur in dem Filter und einen Auslass für die gereinigte Luft, **dadurch gekennzeichnet, dass** der Filtrierungsabschnitt aus einem aus einer Mehrzahl von Röhren (20) mit porösen oder perforierten Wänden bestehenden Strukturkamm besteht, wobei die Röhren (20) mit einer aus einem aktivierten Granulat aus Holz oder Kohle gemischt mit thermisch modifizierter Holzfaser bestehenden Filtriermasse gefüllt sind, wobei die Röhren (20) vertikal in dem Körper (9) des Biofilters und senkrecht zu der Strömungsrichtung der verunreinigten Luft angeordnet sind, die zwischen der oberen und der unteren hermetischen horizontalen Platte (6) in den Filter eintritt, wobei die Enden der Röhren (20) unterhalb der unteren horizontalen Platte (6) in eine aktivierte Flüssigkeit eingetaucht sind, wodurch die gesamte in den Filtrierungsabschnitt eintretende Strömung der verunreinigten Luft durch die Wände der Röhren (20) und weiter durch die Filtriermasse innerhalb der Röhren (20) zu der Auslassleitung (8) bewegt wird.

2. Biofilteradsorber nach Anspruch 1, **dadurch gekennzeichnet, dass** die Röhren (20) mit dem Granulat aus Holz oder Kohle mit einem Durchmesser von 2,0 - 6,0 mm, gemischt im Verhältnis von 10:1 mit thermisch modifizierter Holzfaser, gefüllt sind.

3. Biofilteradsorber nach Anspruch 1, **dadurch gekennzeichnet, dass** die Perforationen in den Wänden der Röhren (20) einen Durchmesser von 1,0 bis 2,0 mm und einen Abstand zwischen benachbarten Perforationen von 0,5 bis 1,0 mm aufweisen.

4. Biofilteradsorber nach Anspruch 1, **dadurch gekennzeichnet, dass** die Röhren (20) in Reihen (I, II, III, IV, etc.) mit einem Winkel von 30 - 45° zu der Richtung der in den Filter eintretenden verunreinigten Luft in einem Abstand von 1,0 - 2,0 mm in einer Reihe angeordnet sind, und wobei und der Abstand zwischen den Reihen (I, II, III, IV, etc.) den Radius der Röhre (20) nicht überschreitet.

5. Biofilteradsorber nach Anspruch 1, **dadurch gekennzeichnet, dass** die Enden der Röhren (20) mit einem Sieb (7) mit Löchern mit einem Durchmesser von 0,5 bis 1,0 mm abgedeckt sind.

6. Biofilteradsorber nach Anspruch 1, **dadurch gekennzeichnet, dass** die unteren Enden der Röhren (20) in der unteren horizontalen Platte (6) bei 1/3 der Höhe der Röhren (20) vom Boden aus befestigt sind und in der aktivierten Flüssigkeit eingetaucht sind, um eine kapillare Befeuchtung der Filtriermasse innerhalb der Röhren (20) zu bewirken.

7. Biofilteradsorber nach Anspruch 6, **dadurch gekennzeichnet, dass** die untere horizontale Platte (6) eine Trennwand aufweist, die den Bewegungsraum der verunreinigten Luft vom Wassertank (14) mit der aktivierten Flüssigkeit trennt

## Revendications

1. Absorbeur à filtre biologique comprenant une conduite d'alimentation en air pollué, un corps, une section de filtrage d'air pollué consistant en une pluralité de tubes de filtration disposés dans le corps, un système d'humidification disposé en-dessous de la section de filtration, des systèmes de maintien de la température dans le filtre, et une sortie d'air purifié, **caractérisé en ce que** la section de filtration consiste en un peigne structurel composé d'une pluralité de tubes (20) des parois poreuses perforées remplis d'une charge de filtration consistant en granulés activés de bois ou de charbon mélangés avec des fibres de bois modifiées thermiquement, les tubes de filtration (20) étant disposés verticalement dans le corps du filtre biologique (9) et perpendiculairement (6) au sens d'un flux d'air pollué entrant dans le filtre entre les feuilles horizontales hermétiques supérieure et inférieure (6) avec les extrémités des tubes (20) en-dessous de la feuille horizontale inférieure (6) submergées dans un liquide activé, en forçant ainsi la totalité de l'air du flux d'air pollué entrant dans la section de filtration à se déplacer à travers les parois des tubes (20) et plus loin à travers la charge de filtration à l'intérieur des tubes (20) jusqu'à la conduite de décharge (8).

2. Absorbeur à filtre biologique selon la revendication 1, **caractérisé en ce que** les tubes (20) sont remplis de granulés de bois de charbon d'un diamètre de 2,0 à 6,0 mm mélangés à de la fibre de bois modifiée thermiquement en un rapport de 10 à 1.

3. Absorbeur à filtre biologique selon la revendication 1, **caractérisé en ce que** les perforations des parois des tubes (20) ont un diamètre de 1,0 à 2, rapport 0 mm et que la distance entre les perforations adjacentes est de 0, 5 à 1,0 mm.,

4. Absorbeur à filtre biologique selon la revendication 1, **caractérisé en ce que** les tubes (20) sont placés en ligne (I, II, III, IV, etc.) suivant un angle de 30 à 45 ° par au sens de l'air pollué entrant dans le filtre à la distance de 1,0 à 2,0 mm dans une ligne et que la distance entre les lignes (I, II, III, IV, etc.) n'excède pas le rayon du tube (20).

5. Absorbeur à filtre biologique selon la revendication 1, **caractérisé en ce que** les extrémités des tubes (20) sont recouvertes de maille (7) ayant des trous de 0,5 à 1,0 mm de diamètre.

6. Absorbeur à filtre biologique selon la revendication 1, **caractérisé en ce que** les extrémités inférieures des tubes (20) sont fixées à la feuille horizontale inférieure (6) à 1/3 de la hauteur des tubes (20) en partant du fond et sont submergées dans le liquide activé pour provoquer l'humidification capillaire de la charge de filtration à l'intérieur des tubes (20).

7. Absorbeur à filtre biologique selon la revendication 6, **caractérisé en ce que** la feuille horizontale inférieure (6) est une cloison séparant l'espace de mouvement de l'air pollué de la cuve à eau (14) contenant du liquide activé.
